# EUROPÄISCHE PATENTSCHRIFT

(11) **EP 0 514 510 B1**
(45) Veröffentlichungstag und Bekanntmachung des Hinweises auf die Patenterteilung: **13.07.1994**
(21) Anmeldenummer: 91920620.1
(22) Anmeldetag: 30.11.1991
(51) Int. Cl.: B23K 26/00, B23K 15/00, B23K 37/047

(54) **VERFAHREN ZUM HERSTELLEN EINES WÄRMETAUSCHERS UND VORRICHTUNG ZUR DURCHFÜHRUNG DES VERFAHRENS**
METHOD OF MANUFACTURING A HEAT EXCHANGER, AND DEVICE FOR CARRYING OUT THE METHOD
PROCEDE POUR LA FABRICATION D'UN ECHANGEUR DE CHALEUR ET DISPOSITIF POUR LA REALISATION DU PROCEDE

(30) Priorität: 08.12.1990 DE 4039292
(43) Veröffentlichungstag der Anmeldung: 25.11.1992
(73) Patentinhaber: GEA LUFTKÜHLER GmbH, D-44809 Bochum (DE)
(72) Erfinder: BORCHERT, Werner, D-4330 Mülheim-Ruhr (DE); VON CLEVE, Hans-Henning, D-4630 Bochum (DE)
(74) Vertreter: Bockermann, Rolf, Dipl.-Ing.
(86) Internationale Anmeldenummer: DE9100937
(87) Internationale Veröffentlichungsnummer: WO9210329

(56) Entgegenhaltungen:
- DE-A- 3 622 266
- FR-A- 2 566 306
- GB-A- 1 228 896
- US-A- 2 703 226

## Beschreibung

Die Erfindung richtet sich auf ein Verfahren zum Herstellen eines Wärmetauschers gemäß den Merkmalen in den Oberbegriffen der Patentansprüche 1 und 2 sowie auf eine Vorrichtung zur Durchführung des Verfahrens entsprechend dem Oberbegriff des Patentanspruchs 5.

Durch die DE-C2-34 19 734 ist ein Wärmetauscher bekannt, mit dessen Hilfe Wärme z.B. zwischen Gasen und Flüssigkeiten oder zwischen Gasen und kondensierenden Dämpfen ausgetauscht werden kann. Ein solcher Wärmetauscher wird vorwiegend eingesetzt, um Luft zu kühlen oder Dämpfe mittels Luft zu kondensieren.

In Verbindung mit Austauscherrohren aus Stahl finden insbesondere Rippen aus Stahl, und zwar in tauchverzinkter Ausführung, Verwendung. Solche Rippen werden auf entsprechenden Maschinen aus Platten oder Bändern gestanzt und in Längsrichtung auf die Austauscherrohre geschoben. Die anschließende Verzinkung im Tauchbad dient nicht nur zum Schutz der Austauscherrohre und der Rippen, sondern stellt gleichzeitig auch die metallische Verbindung der Austauscherrohre mit den Rippen her.

Die in Strömungsrichtung des äußeren Wärmetauschermediums schlanken, im Prinzip ovalen Austauscherrohre werden in mindestens einer Reihe nebeneinander zwischen endseitigen Rohrböden angeordnet. Die Rohrenden werden in die Rohrböden eingewalzt oder eingeschweißt. Neben den Rohrböden werden stabile Stützkonstruktionen zum Verbund der Austauscherrohre herangezogen.

Bei der Fertigung des bekannten Wärmetauschers bildet es eine Notwendigkeit, daß die maschinellen Vorgänge zum Ausstanzen und Aufschieben der Rippen auf die Austauscherrohre mit hoher Präzision ablaufen müssen, damit eine möglichst innige Verbindung der Austauscherrohre mit den Rippen sichergestellt werden kann. Hierfür ist ein beträchtlicher Aufwand erforderlich. Da ferner die Rippen über die Austauscherrohre geschoben werden, bildet das im Querschnitt der Austauscherrohre anfallende ausgestanzte Material gewichtsmäßig einen erheblichen Anteil, der überwiegend ungenutzt in den Schrott wandert.

Werden die Austauscherrohre einzeln verzinkt, wird jedes Austauscherrohr zunächst an seinen Enden plattgedrückt und dicht geschweißt, damit nur die Außenflächen gebeizt sowie passiviert werden und ein Verzinken der Innenflächen unterbleibt. Auch dies erfordert einen erheblichen Aufwand. Nach dem Verzinken der Austauscherrohre müssen die plattgedrückten und verschweißten Enden entfernt werden. Dies ist ebenfalls mit einem zusätzlichen Arbeitsaufwand und mit im Prinzip nicht verwertbarem Materialabfall verbunden.

Anschließend ist es dann erforderlich, die einzelnen Austauscherrohre über die erwähnten Stützkonstruktionen zu Wärmetauschern zusammenzufügen, die über ihre Länge selbsttragend sein müssen.

Das Herstellen eines Wärmetauschers ist also im bekannten Fall mit relativ aufwendigen und zeitraubenden Arbeitsgängen verbunden. Hinzu kommt, daß die Fertigungsabläufe durch Maßnahmen zur Vermeidung von Beschädigungen des durch das Verzinken aufgebrachten Oberflächenschutzes bei der Montage des Wärmetauschers zusätzlich erschwert werden.

Infolge des inneren Unterdrucks und/oder äußeren Überdrucks wirken auf die großflächigen Rohrflanken der schlanken Austauscherrohre erhebliche Kräfte ein. Dies führt dazu, daß bei Überschreiten eines bestimmten Schlankheitsgrads die Rohrflanken eingedrückt werden, wenn nicht geeignete Maßnahmen in Form von Abstützungen vorgesehen werden. In diesem Zusammenhang hat man vorgeschlagen, die Rohrflanken durch mindestens einen inneren Quersteg gegeneinander abzustützen.

Der Erfindung liegt ausgehend von den in den Oberbegriffen der Patentansprüche 1, 2 und 5 genannten Merkmalen die Aufgabe zugrunde, sowohl ein Verfahren zum Herstellen eines Wärmetauschers als auch eine Vorrichtung zur Durchführung des Verfahrens zu schaffen, die es erlauben, Wärmetauscher mit in Strömungsrichtung des äußeren Wärmetauschermediums schlanken langgestreckten Austauscherrohren herzustellen, bei denen der Gefahr des Eindrückens der großflächigen Rohrflanken mit wirtschaftlich sinnvollen Maßnahmen begegnet werden kann.

Was die Lösung des verfahrensspezifischen Teils dieses Problems anlangt, so besteht ein erfindungsgemäßer Vorschlag in den Merkmalen des Patentanspruchs 1.

Danach werden jetzt die Rohrflanken vor dem Verzinken der Austauscherrohre durch eine feste Verbindung mit den Rippen einwandfrei ausgesteift. Zu diesem Zweck wird insbesondere das Laserstrahlschweißverfahren oder ein die relevanten Charakteristiken dieses Verfahrens aufweisendes Verfahren herangezogen. Um den Schweißvorgang einwandfrei realisieren zu können, sorgt die Erfindung zunächst dafür, daß die kurzen Rippenfüße mit einer Außenseite eines Halbrohrs in einen weitgehend flächigen Kontakt gelangen. Bei bleibender Anlage der Rippenfüße an der Außenseite wird dann ein Schmelzschweißstrahl so quer über die Innenseite des Halbrohrs geführt, daß aufgrund der Relativbewegung von Halbrohr und Rippen einerseits sowie Schmelzschweißstrahl andererseits jeder Rippenfuß an mehreren Stellen mit dem Halbrohr fest verbunden wird.

Die Außenseite (Rohrflanke) eines Halbrohrs erfährt also über die Rippen eine vielfache Aussteifung. Dies hat zur Folge, daß auch extrem schlanke Austauscherrohre wirkungsvoll ausgesteift und dennoch wirtschaftlich gefertigt werden können. Das Verfahren gestattet darüberhinaus eine schnelle und relativ kostengünstige Umstellung auf optimale Querschnitte gemäß individuell zu erstellender thermodynamischer Berechnungen. In diesem Zusammenhang sollte erwähnt werden, daß wegen der großen Zahl der einzusetzenden Rippen herkömmliche Befestigungsmaßnahmen sehr schnell an die Grenzen wirtschaftlicher Machbarkeit stoßen (ein typisches Großrohrbündel mit ca. fünfzig 10 m langen Rippenrohren weist pro Rippenrohr ca. 8000 Rippen auf).

Haben alle Rippen eines Halbrohrs den Einflußbereich des Schmelzschweißstrahls durchlaufen, wird ein solches beripptes Halbrohr mit einem weiteren auf diese Art und Weise berippten Halbrohr zusammengesetzt und entlang der Längskanten zu einem Austauscherrohr verschweißt.

Die Rippen können einzeln gefertigt sein und nacheinander dem zu berippenden Halbrohr zugeführt werden. Denkbar ist aber auch, daß die Rippen Bestandteil eines mäanderförmigen Bands bilden, welches auf ein Halbrohr geschweißt wird.

Ein solches Austauscherrohr kann einzeln oder gebündelt mit weiteren Austauscherrohren einem Verzinkungsprozeß unterworfen werden. Dies kann beispielsweise dadurch geschehen, daß die Austauscherrohre endseitig blindgeflanscht und danach gebeizt sowie passiviert werden. Im Anschluß daran werden dann die Austauscherrohre einzeln oder bündelweise im Bad verzinkt.

Ein weiterer Vorschlag zur Lösung des verfahrensspezifischen Teils des Problems besteht in den Merkmalen des Patentanspruchs 2.

Dieses Verfahren sieht vor, zwei Halbrohre durch U-förmige Rippen unter Anwendung des Schmelzschweißstrahlverfahrens miteinander zu koppeln und anschließend ein derartiges Verbundelement mit weiteren solcher Verbundelemente durch Schweißungen entlang der Längskanten der Halbrohre zu einem reihenartigen Rohrbündel zu verbinden.

Auch in diesem Fall werden wie bei der vorstehend beschriebenen Ausführungsform zunächst Rippen - jetzt allerdings U-förmige Rippen - dadurch auf eine Außenseite eines Halbrohrs geschweißt, daß bei bleibender Anlage der Rippenfüße an der Außenseite ein Schmelzschweißstrahl so quer über die Innenseite des Halbrohrs geführt wird, daß aufgrund der Relativbewegung von Halbrohr und Rippen einerseits sowie Schmelzschweißstrahl andererseits jeder Rippenfuß an mehreren Stellen mit dem Halbrohr fest verbunden wird. Anschließend wird das so berippte Halbrohr mit dem nächsten Halbrohr dadurch verbunden, daß dieses Halbrohr auf die freien Rippenfüße der Rippen gelegt und dann mit diesen per Schmelzschweißstrahl verschweißt wird.

Die derart gebildeten Austauscherrohrreihen haben den Vorteil, daß die empfindlichen Rippen während der verschiedenen Handhabungen beim Verzinken geschützt liegen und folglich keinen Beschädigungen unterworfen sind.

Ein weiterer Vorteil ist darin zu sehen, daß zwischen zwei benachbarten Austauscherrohren nur eine Rippenreihe angeordnet wird. Die Wirtschaftlichkeit der Herstellung wird hierdurch weiter erhöht.

Denkbar ist es im Rahmen des vorstehend erläuterten Verfahrens aber auch, daß die U-förmigen Rippen gleichzeitig an die benachbarten Halbrohre geschweißt werden. Zu diesem Zweck ist es dann erforderlich, Schmelzschweißstrahlen sowohl von der einen als auch von der anderen Richtung an die Innenseiten der Halbrohre zur Verbindung der Rippen mit den beiden Halbrohren heranzuführen.

Auch in diesem Fall können die Rippen einzeln gefertigt sein oder Bestandteil eines mäanderförmigen Bands bilden.

Obwohl im Vorstehenden beschrieben wurde, daß Halbrohre definierter Länge mit einer darauf abgestellten Anzahl von Rippen verbunden werden, liegt es dem erfindungsgemäßen Grundgedanken nicht fern, auch Halbrohre undefinierter Länge mit Rippen zu versehen und diese berippten Halbrohre dann entsprechend dem jeweiligen Bedarf abzulängen. Hierdurch wird ebenfalls ein bedeutender wirtschaftlicher Vorteil erzielt.

Entsprechend den Merkmalen des Patentanspruchs 3 können die Abstandshalter so bemessen werden, daß sie nicht nur die Rippenstege einwandfrei gegeneinander abstützen und dadurch ein Verwinden der schlanken Rippenstege bei Belastung der Rohrflanken verhindern, sondern daß sie auch im Bereich der Rippenfüße Freiräume schaffen. Folglich bilden sich beim Verzinken hohlkehlnahtartige Übergänge zwischen der Rohrwandung und den Rippenfüßen aus, die zu einer merklichen Verbesserung des Wärmeflusses beitragen.

Die Abstandshalter haben bevorzugt eine trapezförmige Konfiguration. Sie sind sowohl über die Länge als auch über die Höhe der Rippenstege gleichmäßig oder ungleichmäßig verteilt angeordnet. Es sind auch andere Konfigurationen denkbar, da sie nämlich auch Turbulenzen an der Rippenfläche erzeugen und somit zur Verbesserung der Wärmeübertragung beitragen.

Die Möglichkeit gemäß Patentanspruch 4, die Rippen auch schräg zur Längserstreckung der Halbrohre befestigen zu können, trägt zur Minimierung der kühlmittelseitigen Sekundärverluste eines Wärmetauschers bei. Die Rippen wirken in diesem Fall gewissermaßen als Leitschaufeln für das äußere Wärmetauschermedium.

Die Lösung des gegenständlichen Teils des der Erfindung zugrundeliegenden Problems besteht in den Merkmalen des Patentanspruchs 5.

Hierbei handelt es sich in bevorzugter Ausgestaltung um eine Vorrichtung, die im Prinzip keine eigenen Antriebsaggregate aufweist. Das heißt, daß sowohl das Stützband als auch die Mitnahmebänder als auch die Zuführung für die Rippen keine eigenen motorischen Antriebe besitzen. Lediglich auf die zu berippenden Halbrohre wird eine Zugkraft aufgebracht. Diese Zugkraft wirkt sich dann über die mit einem Halbrohr bereits verschweißten Rippen auf die seitlichen Mitnahmebänder für die Rippen aus und letztlich über die Kupplung zwischen mindestens einem Mitnahmeband und der Rippenzuführung auch auf den Zuführungstakt. Auf diese Weise kann also sichergestellt werden, daß alle sich bewegenden Teile eindeutig synchron laufen und damit eine exakte Positionierung der Rippen an den Halbrohren gewährleistet werden kann. Die Erfindung schließt indessen nicht aus, daß mindestens ein Teil ggf. mit einem Antrieb ausgerüstet ist.

Die Erfindung sieht an einem Ende des um Horizontalachsen endlos umlaufenden Stützbands eine Rippenzuführung vor. Die Rippen kommen z. B. von einer Stanze bzw. von einem Vibriertopf. Sie werden im Bereich der Zuführung taktweise auf die Transportfläche des Stützbands abgestellt und gelangen anschließend in den Einflußbereich der seitlichen Mitnahmebänder. Diese dienen nicht nur zum Vorwärtsbewegen der Rippen, sondern bestimmen auch exakt den Abstand der Rippen und deren Vertikalstellung. Die Rippenzuführung erstreckt sich normalerweise im rechten Winkel zur Laufrichtung des Stützbands.

In Laufrichtung des Stützbands ist hinter der Zuführung eine Einschubeinheit für Halbrohre vorgesehen. Über diese Einschubeinheit werden die Außenseiten der Halbrohre in Kontakt mit den oben liegenden Rippenfüßen gebracht und zweckmäßig mit einem voraufgehenden bereits unter einer bestimmten Zugkraft stehenden Halbrohr zug- und druckfest gekuppelt. Auf diese Weise bewegen sich auch die lediglich in Kontakt mit einem Halbrohr befindlichen Rippen mit identischer Geschwindigkeit wie das betreffende Halbrohr.

Im Bereich der Schweißeinrichtung werden die Rippenfüße und die Halbrohre von deren Innenseiten her mittels eines Schmelzschweißstrahls verbunden. Da der Schmelzschweißstrahl schräg zur Laufrichtung des Stützbands zwangsweise hin und her geführt wird, ergibt sich - über die Länge eines Halbrohrs betrachtet - ein gewissermaßen zickzack-förmiger Schweißnahtverlauf, welcher sicherstellt, daß jeder Rippenfuß mehrfach durch eine schräg verlaufende Schweißnaht mit dem Halbrohr verbunden wird. Ein weiterer Vorteil des Schmelzstrahlschweißens liegt darin, das beim Aufbringen von Rippen auf Halbrohren der Schmelzschweißstrahl von der Innenseite der Halbrohre her aufgebracht werden kann. Von dieser Seite kann der zum Schweißen notwendige Schutzgasmantel wesentlich leichter aufgebaut werden, als wenn er auf der anderen Seite im Bereich der Rippenfüße erzeugt werden müßte.

Entsprechend den Merkmalen des Patentanspruchs 6 sind die Bewegungsabläufe des Stützbands, der Mitnahmebänder, der Einschubeinheit, der Zuführung und der Schweißeinrichtung in die Abhängigkeit der Vorschubgeschwindigkeit der einer Zugkraft ausgesetzten Halbrohre gestellt. Folglich geht nur von dieser auf die Halbrohre ausgeübten Zugkraft die Bewegung aller dieser Bauteile aus. Hiermit kann auf einfachste Weise und ohne eigene Antriebseinrichtungen ein absolut synchroner Fertigungsablauf gewährleistet werden. Wegen des synchronen Zusammenspiels könnte aber auch einer der Teile angetrieben sein.

Die Merkmale des Patentanspruchs 7 kennzeichnen eine vorteilhafte Ausführungsform der Zuführung. Am unteren Ende des vertikalen Rippenschachts ist mindestens ein Vereinzelungsritzel angeordnet. Dieses Vereinzelungsritzel sorgt dafür, daß die Rippen mit oben liegendem Rippenfuß exakt und sanft auf die Transportfläche des Stützbands abgelegt und anschließend sofort durch die in Längsrichtung des Stützbands wirkende Druckluft des Andrückaggregats gegen die bereits voraufgehend auf das Stützband abgesetzten Rippen angedrückt werden. Das Vereinzelungsritzel ist so mit mindestens einem Mitnahmeband gekuppelt, daß durch eine entsprechende Betätigung der Kupplung problemlos dafür gesorgt werden kann, daß z. B. die Enden der Halbrohre rippenfrei sind, um die nach dem Verschweißen zweier Halbrohre dann gebildeten Austauscherrohre ordnungsgemäß in den Rohrböden festlegen zu können.

Die nach Patentanspruch 8 quer zur Laufrichtung des Stützbands wirksamen Fördermittel der Einschubeinheit können in beliebiger Weise ausgebildet sein. Denkbar ist z. B. ein Querförderband, das die Halbrohre auf die von den Mitnahmebändern zwangsgeführten Rippen schiebt. Vorstellbar ist aber auch ein Fördermittel, welches die Halbrohre von oben auf die Rippen legt.

Um den beim Schmelzstrahlschweißen erforderlichen geringen Spalt zwischen den Rippenfüßen und den Außenseiten der Halbrohre sicherzustellen, sind die Kugelandrückleisten gemäß Patentanspruch 9 beiderseits der Laufebene des Schmelzschweißstrahls vorgesehen. Das heißt, daß mit Hilfe der Kugelandrückleisten jedes Halbrohr unmittelbar im Bereich des Schmelzschweißstrahls mit dem erforderlichen Andruck gegen die auf dem Stützband abgestellten Rippen gepreßt wird.

In diesem Zusammenhang wird dann ein zweckmäßiges Widerlager für die Kugelandrückleisten in den Merkmalen des Patentanspruchs 10 gesehen. Ein solches Walzenandrückbett erstreckt sich zweckmäßig über den gesamten Einflußbereich des Schmelzschweißstrahls.

Die Erfindung ist nachfolgend anhand von in den Zeichnungen dargestellten Ausführungsbeispielen näher erläutert. Es zeigen:
- Figur 1: in der Perspektive im Schema eine Vorrichtung zum Herstellen von berippten Halbrohren als Zwischenprodukte für Austauscherrohre;
- Figur 2: einen Längsschnitt durch die Darstellung der Figur 1;
- Figur 3: einen Querschnitt durch die Darstellung der Figur 2 entlang der Linie III-III;
- Figur 4: in vergrößerter Darstellung einen Teillängsschnitt durch ein beripptes Halbrohr;
- Figur 5: eine Draufsicht auf die Darstellung der Figur 4 gemäß dem Pfeil V;
- Figur 6: eine Ansicht auf einen Teil einer Rippe gemäß dem Pfeil VI der Figur 4;
- Figur 7: im Schema eine Variante der Darstellung der Figur 1;
- Figur 8: in der Perspektive im Schema einen Abschnitt eines Austauscherrohrs mit beidseitig angesetzten Rippen;
- Figur 9: in der Perspektive im Schema ein Verbundelement aus zwei durch Rippen miteinander verbundenen Halbrohren;
- Figur 10: in perspektivischer Darstellung einen Wärmetauscher und
- Figur 11: in der Stirnansicht einen luftgekühlten Oberflächenkondensator in zwei verschiedenen Ausführungsformen.

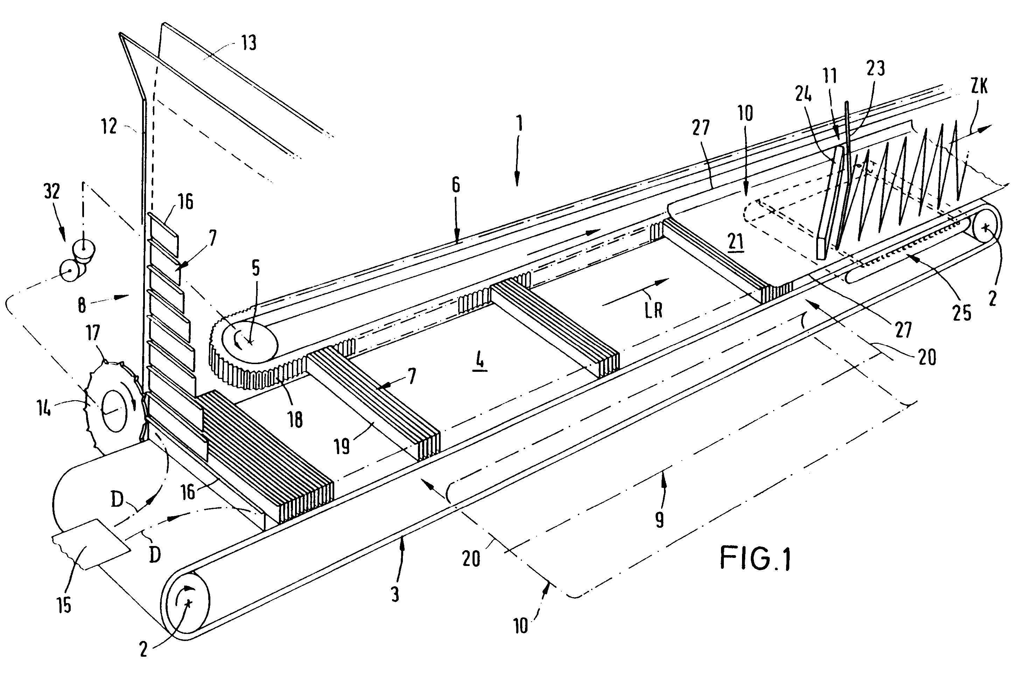

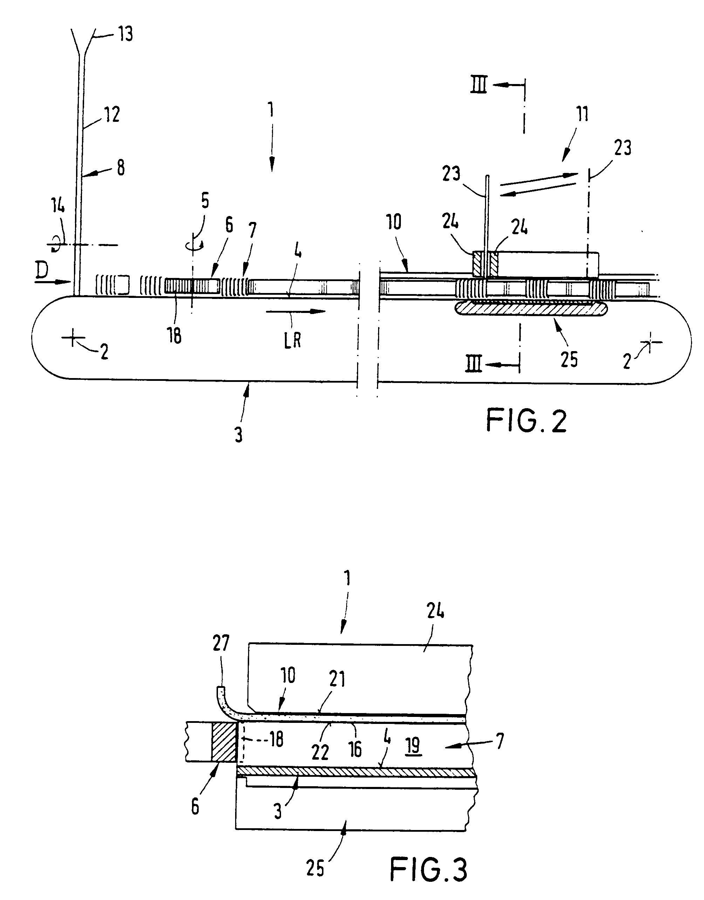

In den Figuren 1 bis 3 ist mit 1 eine Vorrichtung zum Herstellen von berippten Halbrohren 10 bezeichnet. Die Vorrichtung 1 umfaßt ein um Horizontalachsen 2 endlos umlaufendes Stützband 3 mit einer waagerechten Transportfläche 4, beiderseits des Stützbands 3 synchron zu diesem um Vertikalachsen 5 endlos umlaufende Mitnahmebänder 6 für Rippen 7 (nur ein Mitnahmeband 6 ist dargestellt), eine an einem Ende des Stützbands 3 angeordnete Zuführung 8 für die Rippen 7, eine sich in Laufrichtung LR des Stützbands 3 hinter der Zuführung 8 erstreckende Einschubeinheit 9 für unberippte Halbrohre 10 und eine am anderen Ende des Stützbands 3 befindliche Laserschweißeinrichtung 11. Die sich im rechten Winkel zur Laufrichtung LR des Stützbands 3 erstreckende Zuführung 8 ist parallel zu den Horizontalachsen 2 des Stützbands 3 angeordnet.

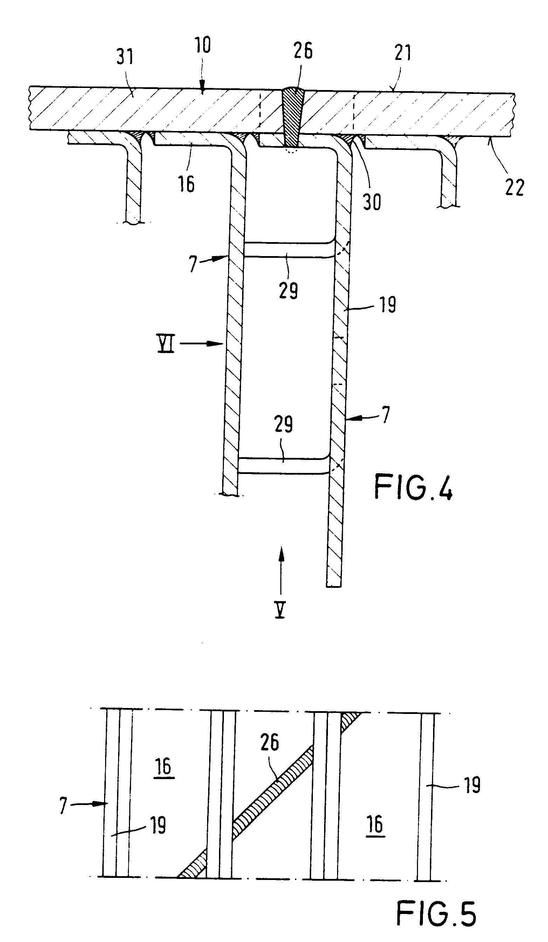

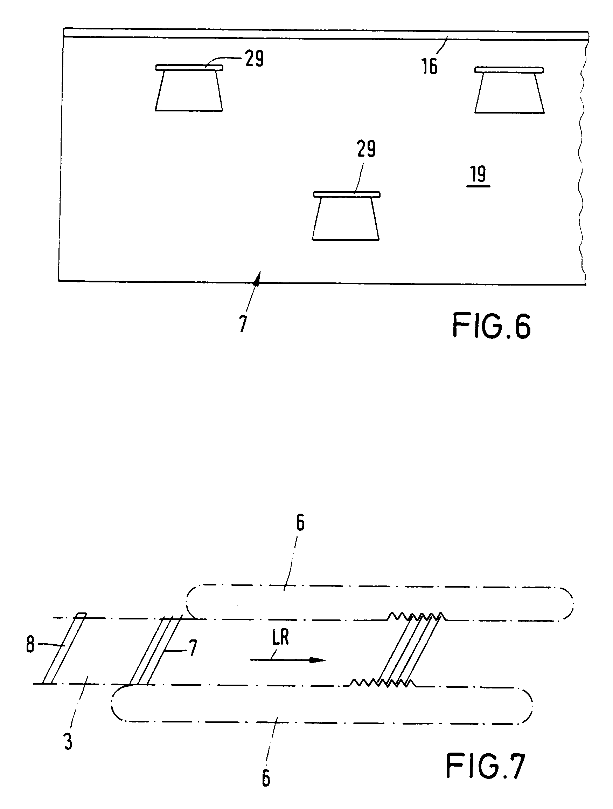

Die Zuführung 8 für die Rippen 7 umfaßt einen vertikalen Rippenschacht 12 mit einem Einführtrichter 13, zwei am unteren Ende des Rippenschachts 12 beidseitig des Stützbands 3 angeordnete Vereinzelungsritzel 14 (nur eines ist dargestellt) sowie ein mit Druckluft D beaufschlagbares Andrückaggregat 15. Die von einer entsprechenden Stanze kommenden im Querschnitt L-förmigen Rippen 7 (siehe auch Figuren 4 und 6) fallen mit den Rippenfüßen 16 nach oben in den Rippenschacht 12 und werden von den am Umfang mit Leitnocken 17 versehenen Vereinzelungsritzeln 14 im vorgesehenen Takt auf die Transportfläche 4 des Stützbands 3 abgesetzt. Nach Aufhebung der Führung zwischen den Vereinzelungsritzeln 14 und den Rippen 7 werden diese mittels der aus dem Andrückaggregat 15 tretenden Druckluft D gegen die sich bereits auf dem Stützband 3 befindlichen Rippen 7 geblasen.

Im Abstand zu der Zuführung 8 erstrecken sich die beiderseits des Stützbands 3 im Höhenbereich der Rippen 7 angeordneten und mit seitlichen Aussparungen 18 versehenen Mitnahmebänder 6. Die Aussparungen 18 sind so ausgebildet, daß sie jeweils den Rippensteg 19 weitgehend spielfrei erfassen.

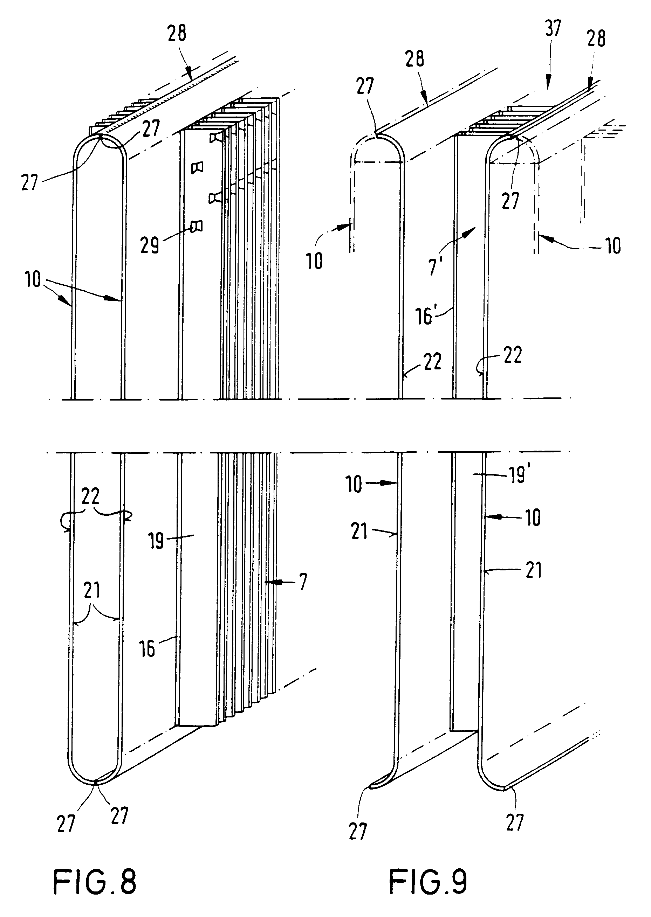

Ferner ist mit Abstand zur Zuführung 8 in Laufrichtung LR des Stützbands 3 die Einschubeinheit 9 für die insbesondere aus der Figur 9 näher erkennbaren Halbrohre 10 ersichtlich. Diese nur schematisch angedeutete Einschubeinheit 9 ermöglicht es mit einem geeigneten Fördermittel 20, Halbrohre 10 mit den Innenseiten 21 nach oben so oberhalb der von den Mitnahmebändern 6 zentrierten Rippen 7 zu verlagern, daß die Außenseiten 22 der Halbrohre 10 in einen flächigen Kontakt mit den Rippenfüßen 16 gelangen.

Benachbart zur Einschubeinheit 9 ist in Laufrichtung LR des Stützbands 3 die Laserschweißeinrichtung 11 vorgesehen. Die Laserschweißeinrichtung 11 umfaßt einen vertikalen geneigt zur Laufrichtung LR des Stützbands 3 über die gesamte Breite des Halbrohrs 10 hin und her zwangsgeführten Laserstrahl 23. Beiderseits des Laserstrahls 23 sind Kugelandrückleisten 24 vorgesehen (in Figur 1 nur eine dargestellt), welche sicherstellen, das im Wirkbereich des Laserstrahls 23 das hier befindliche Halbrohr 10 mit seiner Außenseite 22 einwandfrei an die Rippenfüße 16 gedrückt wird.

Als Widerlager für die Kugelandrückleisten 24 ist unterhalb des Stützbands 3 ein Walzenandrückbett 25 vorgesehen.

Die Bewegungsenergie für das Stützband 3, die Mitnahmebänder 6 und die Zuführung 8 wird über eine Zugkraft ZK aufgebracht, die an dem Halbrohr 10 angreift, welches sich innerhalb der Laserschweißeinrichtung 11 befindet. Die nachfolgend über die Einschubeinheit 9 eingebrachten Halbrohre 10 werden zweckmäßig mit den sich jeweils in der Laserschweißeinrichtung 11 befindenden Halbrohren 10 mechanisch lösbar gekoppelt.

Der Lauf des Laserstrahls 23, die Geschwindigkeit des hin und her gehenden Laserstrahls 23 sowie die Vorschubgeschwindigkeit des sich in der Laserschweißeinrichtung 11 befindenden Halbrohrs 10 sind so aufeinander abgestimmt, daß (siehe auch Figuren 4 und 5) jeder Rippenfuß 16 mehrfach linienförmig mit dem Halbrohr 10 verbunden wird. Die Schweißnaht ist mit 26 bezeichnet.

Ist ein Halbrohr 10 vollständig berippt, so wird es von dem nachfolgenden Halbrohr 10 abgekoppelt und zusammen mit einem bereits berippten Halbrohr 10 gemäß Figur 8 durch Verschweißung der Längskanten 27 zu einem Austauscherrohr 28 verbunden. Dieses Austauscherrohr 28 kann dann einzeln oder im Verbund mit weiteren Austauscherrohren 28 verzinkt werden.

Aus den Figuren 4 und 6 ist noch zu erkennen, daß aus den Rippenstegen 19 Abstandshalter 29 gestanzt und parallel zu den Rippenfüßen 16 umgebogen sind. Die Länge der Abstandshalter 29 ist größer als die Länge der Rippenfüße 16 bemessen. Auf diese Weise können sich beim Verzinken hohlkehlartige Bereiche 30 zur Verbesserung des Wärmeübergangs von der Rohrwandung 31 auf die Rippenfüße 16 bilden (Figur 4). Die Abstandshalter 29 haben eine Trapezform.

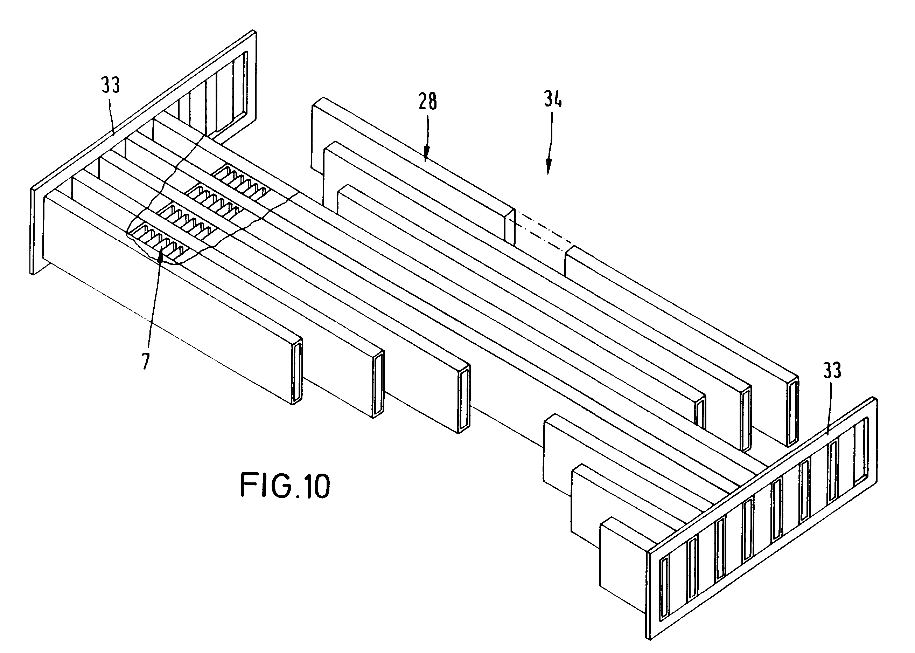

Wie Figur 1 noch zeigt, sind die Vereinzelungsritzel 14 über eine Kupplung 32 mit einem Mitnahmeband 6 verbunden. Mit Hilfe dieser Kupplung 32 kann die Zuführung 8 von dem Mitnahmeband 6 abgekoppelt werden. Zweck dieser Maßnahme ist es, für den Zeitraum der Abkopplung das Bereitstellen von Rippen 7 zu verhindern. Dies gilt insbesondere für die mit den Rohrböden 33 eines Wärmetauschers 34 zu verbindenden Endabschnitte der Austauscherrohre 28 (Figur 10).

Aus der Figur 7 ist eine Variante der Relativzuordnung der Mitnahmebänder 6 zum Stützband 3 veranschaulicht. Mit Hilfe dieser Bauart sollen die Rippen 7 geneigt zur Laufrichtung LR des Stützbands 3 an den Halbrohren 10 befestigt werden. Zu diesem Zweck ist die Zuführung 8 in dem erforderlichen Winkel schräg zur Laufrichtung LR des Stützbands 3 angeordnet. Außerdem sind die Mitnahmebänder 6 entsprechend diesem Winkel in Längsrichtung zueinander versetzt vorgesehen.

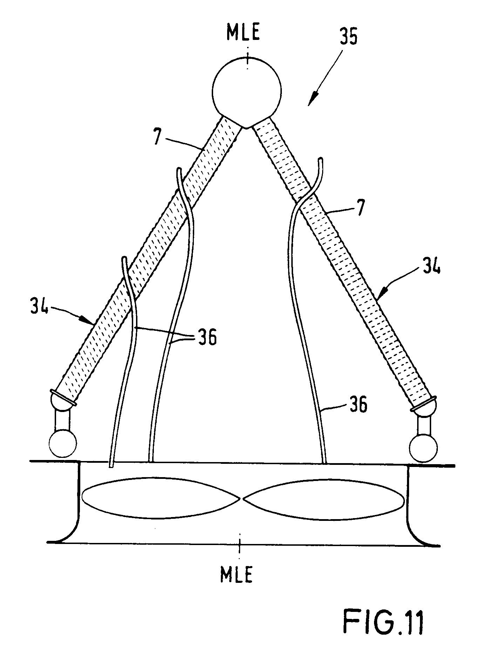

In Anlehnung an die Darstellung der Figuren 1 und 7 ist in der Figur 11 ein luftgekühlter Oberflächenkondensator 35 veranschaulicht, der dachförmig zueinander angeordnete Wärmetauscher 34 aufweist. Dabei ist rechts der vertikalen Mittellängsebene MLE eine Ausführungsform dargestellt, bei welcher die Rippen 7 genau im rechten Winkel zur Längsrichtung der Austauscherrohre angeordnet sind. Links von der vertikalen Mittellängsebene MLE ist ein Wärmetauscher 34 dargestellt, bei welchem die Rippen in einem von 90° zur Längsrichtung der Austauscherrohre abweichenden Winkel angeordnet sind. Hierdurch können die kühlmittelseitigen Sekundärverluste merklich minimiert werden. Dies wird durch die Stromfäden 36 der Kühlluft auch optisch verdeutlicht.

Die aus Figur 9 erkennbare Ausführungsform zeigt zwei durch U-förmige Rippen 7′ zu einem Verbundelement 37 miteinander verbundene Halbrohre 10. Die Herstellung dieses Verbundelements 37 vollzieht sich zunächst exakt wie die der Halbrohre 10 mit L-förmigen Rippen 7, welche dann gemäß Figur 8 zu Austauscherrohren 28 zusammengeschweißt werden. Sind die Rippen 7′ auf ein Halbrohr 10 aufgebracht, wird das so berippte Halbrohr 10 um 180° gedreht und die freien Rippenfüße 16′ werden mit der Außenseite 22 eines weiteren Halbrohrs 10 unter Benutzung der Vorrichtung 1 gemäß Figur 1 in Kontakt gebracht. Dann werden das berippte Halbrohr 10 und das weitere Halbrohr 10 mit identischer Geschwindigkeit längsverlagert und die freien Rippenfüße 16′ werden durch den Laserstrahl 23 von der Innenseite 21 des weiteren Halbrohrs 10 her mit der Außenseite 22 dieses Halbrohrs 10 verbunden.

Nach Fertigstellung eines solchen Verbundelements 37 können dann beliebig viele derartiger Verbundelemente 37 zu einer Austauscherrohrreihe zusammengesetzt werden, indem die Halbrohre 10 entlang ihrer Längskanten 27 verschweißt werden.

Die Figur 10 zeigt in der Perspektive einen Wärmetauscher 34 aus mehreren nebeneinander angeordneten Austauscherrohren 28, die endseitig in Rohrböden 33 festgelegt sind. Ein solcher Wärmeaustauscher 34 kann Austauscherrohre 28 gemäß der Figur 8 oder aus Verbundelementen 37 gemäß der Figur 9 bestehende Austauscherrohre 28 aufweisen. Das heißt, daß ein solcher Wärmeaustauscher 34 auch komplett verzinkt werden kann.

## Patentansprüche

1. Verfahren zum Herstellen eines Wärmetauschers (34) mit berippten Austauscherrohren (28), deren Erstreckung in Strömungsrichtung des äußeren Wärmetauschermediums wesentlich größer als ihre Höhe bemessen ist, bei welchem die separat gefertigten Rippen (7) kontinuierlich auf die Austauscherrohre (28) gebracht und die berippten Austauscherrohre (28) anschließend verzinkt werden, **gekennzeichnet** **durch** folgende Maßnahmen:
Zunächst werden im Querschnitt L-förmige Rippen (7) gefertigt und in einer der Länge eines Austauscherrohrs (28) entsprechenden Anzahl mit definiertem Parallelabstand der Rippenstege (19) über die Rippenfüße (16) mit der Außenseite (22) eines Halbrohrs (10) in Kontakt gebracht,
im Anschluß daran werden die Rippen (7) gemeinsam mit dem Halbrohr (10) mit identischer Geschwindigkeit in dessen Längsrichtung verlagert und durch einen schräg zur Vorschubrichtung von Halbrohr (10) und Rippen (7) über die gesamte Breite des Halbrohrs (10) hin und her geführten Schmelzschweißstrahl (23), beispielsweise Laserstrahl, Elektronenstrahl, von der Innenseite (21) des Halbrohrs (10) aus miteinander verbunden,
danach werden jeweils zwei berippte Halbrohre (10) entlang ihrer Längskanten (27) zu einem Austauscherrohr (28) verschweißt und das so gebildete Austauscherrohr (28) schließlich einem Verzinkungsprozeß unterworfen.

2. Verfahren zum Herstellen eines Wärmetauschers (34) mit berippten Austauscherrohren (28), deren Erstreckung in Strömungsrichtung des äußeren Wärmetauschermediums wesentlich größer als ihre Höhe bemessen ist, bei welchem die separat gefertigten Rippen (7′) kontinuierlich auf die Austauscherrohre (28) gebracht und die berippten Austauscherrohre (28) anschließend verzinkt werden, **gekennzeichnet** **durch** folgende Maßnahmen:
Zunächst werden im Querschnitt U-förmige Rippen (7′) gefertigt und in einer der Länge eines Austauscherrohrs (28) entsprechenden Anzahl mit definiertem Parallelabstand der Rippenstege (19′) über jeweils einen Rippenfuß (16′) mit der Außenseite (22) eines Halbrohrs (10) in Kontakt gebracht,
anschließend werden die Rippen (7′) gemeinsam mit dem Halbrohr (10) mit identischer Geschwindigkeit in dessen Längsrichtung verlagert und durch einen schräg zur Vorschubrichtung von Halbrohr (10) und Rippen (7′) über die gesamte Breite des Halbrohrs (10) hin und her geführten Schmelzschweißstrahl (23), beispielsweise Laserstrahl, Elektronenstrahl, von der Innenseite (21) des Halbrohrs (10) aus miteinander verbunden,
nunmehr wird das berippte Halbrohr (10) um 180° gedreht und die freien Rippenfüße (16′) werden mit der Außenseite (22) eines weiteren Halbrohrs (10) in Kontakt gebracht,
dann werden das berippte Halbrohr (10) und das weitere Halbrohr (10) gemeinsam mit identischer Geschwindigkeit längsverlagert und die freien Rippenfüße (16′) werden durch einen geneigt zur Vorschubrichtung der Halbrohre (10) über die gesamte Breite des weiteren Halbrohrs (10) hin und her geführten Schmelzschwelßstrahl (23) von der Innenseite (21) des weiteren Halbrohrs (10) aus mit diesem verbunden,
im Anschluß daran werden die derart über die Rippen (7′) miteinander gekoppelten Verbundelemente (37) mit weiteren solcher Verbundelemente (37) durch Schweißungen entlang der Längskanten (27) zu Austauscherrohren (28) aneinandergeschlossen und diese letztlich einem Verzinkungsprozeß unterworfen.

3. Verfahren nach Anspruch 1 oder 2, **dadurch ge****kennzeichnet**, daß aus den Rippenstegen (19, 19′) länger als die Rippenfüße (16, 16′) bemessene Abstandshalter (29) gestanzt und parallel zu den Rippenfüßen (16, 16′) umgebogen werden.

4. Verfahren nach einem der Ansprüche 1 bis 3, **dadurch gekennzeichnet**, daß die Rippen (7, 7′) in einem von 90° zur Längserstreckung der Austauscherrohre (28) abweichenden Winkel befestigt werden.

5. Vorrichtung zur Durchführung des Verfahrens nach Anspruch 1 oder einem der folgenden Ansprüche, **gekennzeichnet durch** ein um Horizontalachsen (2) endlos umlaufendes Stützband (3) mit einer waagerechten Transportfläche (4), durch seitlich des Stützbands (3) synchron zu diesem um Vertikalachsen (5) endlos umlaufende Mitnahmebänder (6), durch eine an einem Ende des Stützbands (3) angeordnete Zuführung (8) für Rippen (7, 7′), die über eine Kupplung (32) mit wenigstens einem Mitnahmeband (6) verbunden ist, durch eine sich in Laufrichtung (LR) des Stützbands (3) hinter der Zuführung (8) erstreckende Einschubeinheit (9) für Halbrohre (10) und durch eine am anderen Ende des Stützbands (3) befindliche Einrichtung (11) für Schmelzschweißstrahlen, beispielsweise Laserstrahlen, Elektronenstrahlen, mit einem schräg zur Laufrichtung (LR) des Stützbands (3) hin und her geführten Schmelzschweißstrahl (23).

6. Vorrichtung nach Anspruch 5, **dadurch gekenn****zeichnet**, daß die Bewegungsabläufe des Stützbands (3), der Mitnahmebänder (6), der Zuführung (8), der Einschubeinheit (9) und der Schweißeinrichtung (11) in die Abhängigkeit der Vorschubgeschwindigkeit der einer Zugkraft (ZK) ausgesetzten Halbrohre (10) gestellt sind.

7. Vorrichtung nach Anspruch 5 oder 6, **dadurch ge****kennzeichnet**, daß die Zuführung (8) einen vertikalen Rippenschacht (12), mindestens ein Vereinzelungsritzel (14) und ein mit Druckluft (D) beaufschlagbares Andrückaggregat (15) umfaßt.

8. Vorrichtung nach einem der Ansprüche 5 bis 7, **da****durch gekennzeichnet**, daß die Einschubeinheit (9) quer zur Laufrichtung (LR) des Stützbands (3) wirksame Fördermittel (20) aufweist.

9. Vorrichtung nach einem der Ansprüche 5 bis 8, **da****durch gekennzeichnet**, daß beiderseits der Laufebene des Schmelzschweißstrahls (23) Kugelandrückleisten (24) vorgesehen sind.

10. Vorrichtung nach einem der Ansprüche 5 bis 9, **da****durch gekennzeichnet**, daß die Schweißeinrichtung (11) ein unterhalb des Stützbands (3) angeordnetes Walzenandrückbett (25) besitzt.

## Claims

1. A method of producing a heat-exchanger (34) with finned exchanger tubes (28) whose dimension in the direction of flow of the outer heat-exchanger medium is much greater than their height, wherein the separately produced fins (7) are continuously fitted to the exchanger tubes (28) and the finned exchanger tubes (28) are then galvanised, characterised by the following steps:
firstly, fins (7) of L-shaped cross-section are produced and brought into contact, by way of the fin feet (16), with the outside (22) of a half-tube (10), the number of fins corresponding to the length of an exchanger tube (28) and there being a defined parallel distance between the fin webs (19),
whereafter the fins (7) are moved, together with the half-tube (10), at identical speed and in the longitudinal direction of the tube and are interconnected from the inside (21) of the half-tube (10) by a fusion-welding beam (23), e.g. a laser beam or an electron beam, which reciprocates over the entire width of the half-tube (10) at an angle to the feed direction of the half-tube (10) and fins (7),
whereupon each pair of finned half-tubes (10) is welded along their longitudinal edges (27) to form an exchanger tube (28) and the resulting exchanger tube (28) is finally subjected to a galvanisation process.

2. A method of producing a heat-exchanger (34) with finned exchanger tubes (28) whose dimension in the direction of flow of the outer heat-exchanger medium is much greater than their height, wherein the separately produced fins (7′) are continuously fitted to the exchanger tubes (28) and the finned exchanger tubes (28) are then galvanised, characterised by the following steps:
firstly, fins (7′) of L-shaped cross-section are produced and brought into contact, by way of the fin feet (16′), with the outside (22) of a half-tube (10), the number of fins corresponding to the length of an exchanger tube (28) and there being a defined parallel distance between the fin webs (19′),
whereafter the fins (7′) are moved, together with the half-tube (10), at identical speed and in the longitudinal direction of the tube and are interconnected from the inside (21) of the half-tube (10) by a fusion-welding beam (23), e.g. a laser beam or an electron beam, which reciprocates over the entire width the half-tube (10) at an angle to the feed direction of the half-tube (10) and fins (7′),
the finned half-tube (10) is then rotated through 180° and the free fin feet (16′) are brought into contact with the outside (22) of another half-tube (10),
the finned half-tube (10) and the additional half-tube (10) are then jointly moved longitudinally at identical speed and the free fin feet (16′) are connected to the additional half tube (10) from the inside (21) thereof by means of a fusion-welding beam (23) reciprocating over the entire width of the additional half-tube (10) at an angle to the feed direction of the half-tube (10),
whereupon the composite elements (37) thus interconnected via the fins (7′) are connected to other such composite elements (37) by welds along the longitudinal edges (27) to form exchanger tubes (28), which are finally subjected to a galvanisation process.

3. A method according to claim 1 or 2, characterised in that spacers (29) which have longer dimensions than the fin feet (16, 16′) are punched out of the fin webs (19, 19′) and are bent over parallel to the fin feet (16, 16′).

4. A method according to any one of claims 1 to 3, characterised in that the fins (7, 7′) are secured at an angle other than 90° to the longitudinal dimension of the exchanger tubes (28).

5. Apparatus for performing the method according to claim 1 or any one of the following claims, characterised by a support belt (3) revolving endlessly about horizontal axes (2) and having a horizontal conveying surface (4), driver belts (6) revolving endlessly about vertical axes (5) laterally of and in synchronism with the support belt (3), a feed means (8) for fins (7, 7′), said feed means (8) being disposed at one end of the support belt (3) and being connected by a clutch (32) to at least one driver belt (6), by an insertion unit (9) for half-tubes (10), said unit (9) extending in the direction of motion (LR) of the support belt (3) behind the feed means (8), and by a device (11) at the other end of the support belt (3) for fusion-welding beams, e.g. laser beams or electron beams, having a fusion welding beam (23) reciprocating at an angle to the direction of motion (LR) of the support belt (3).

6. Apparatus according to claim 5, characterised in that the movement cycles of the support belt (3), driver belts (6), feed means (8), insertion unit (9) and welding device (11) are rendered dependent on the feed speed of the half-tube (10) subjected to a tractive force (ZK).

7. Apparatus according to claim 5 or 6, characterised in that the feed means (8) comprises a vertical fin chute (12), at least one separating gear (14) and a pressure application unit (15) actuated by compressed air (D).

8. Apparatus according to any one of claims 5 to 7, characterised in that the insertion unit (9) comprises conveyor means (20) operative transversely of the direction of motion (LR) of the support belt (3).

9. Apparatus according to any one of claims 5 to 8, characterised in that ball pressure-application strips are provided on both sides of the plane of motion of the fusion welding beam (23).

10. Apparatus according to any one of claims 5 to 9, characterised in that the welding device (11) has a roller pressure-application bed (25) disposed beneath the support belt (3).

## Revendications

1. Procédé pour la fabrication d'un échangeur de chaleur (34) avec des tubes d'échangeur (28) nervurés, dont l'extension dans le sens du courant de l'agent d'échangeur de chaleur extérieur est dimensionnée de façon à être sensiblement supérieure à sa hauteur, procédé dans lequel les nervures (7) fabriquées séparément sont appliquées en continu sur les tubes d'échangeur de chaleur (28) et les tubes d'échangeur nervurés (28) sont consécutivement galvanisés, caractérisé par les dispositions suivantes :
dans un premier temps, des nervures (7) en forme de L dans la section transversale sont fabriquées et sont mises en contact en un nombre correspondant à la longueur d'un tube d'échangeur (28) à une distance parallèle définie des âmes de nervure (19) par les bases de nervure (16) avec le côté extérieur (22) d'un demi-tube (10),
ensuite, les nervures (7) conjointement avec le demi-tube (10) sont déplacées à une vitesse identique dans sa direction longitudinale et sont raccordées par un jet de soudure par fusion (23) transversalement à la direction d'avance du demi-tube (10) et des nervures (7) sur toute la largeur du demi-tube (10), jet de soudure par fusion mené en va-et-vient, par exemple un faisceau laser, un faisceau d'électrons à partir du côté interne (21) du demi-tube (10),
ensuite, deux demi-tubes nervurés (10) sont respectivement soudés le long de leurs bords longitudinaux (27) en un tube d'échangeur (28) et le tube d'échangeur (28) ainsi formé est pour finir soumis à un procédé de galvanisation.

2. Procédé pour la fabrication d'un échangeur de chaleur (34) avec des tubes d'échangeur nervurés (28), dont l'extension dans le sens du courant de l'agent d'échangeur de chaleur extérieure est dimensionnée de façon sensiblement supérieure à sa hauteur, procédé dans lequel les nervures fabriquées séparément (7′) sont amenées en continu sur les tubes d'échangeur (28) et les tubes d'échangeur nervurés (28) sont ensuite galvanisés, caractérisé par les dispositions suivantes :
dans un premier temps, sont fabriquées des nervures (7′) en forme de U en section transversale et elles sont mises en contact dans une quantité correspondant à la longueur d'un tube d'échangeur (28) à une distance parallèle définie des âmes de nervure (19′) par respectivement une base de nervure (16′) avec le côté extérieur (22) d'un demi-tube (10),
consécutivement, les nervures (7′) sont déplacées conjointement avec le demi-tube (10) à une vitesse identique dans sa direction longitudinale et sont raccordées par un jet de soudure par fusion (23) obliquement à la direction d'avance du demi-tube (10) et des nervures (7′) sur toute la largeur du demi-tube (10), jet de soudure par fusion amené en va-et-vient, par exemple faisceau laser, faisceau d'électrons, à partir du côté interne (21) du demi-tube (10),
le demi-tube nervuré (10) est alors mis en rotation sur 180° et les bases de nervure libres (16′) sont mises en contact avec le côté extérieur (22) d'un autre demi-tube (10),
puis le demi-tube nervuré (10) et l'autre demi-tube (10) sont déplacés conjointement à une vitesse identique longitudinalement et les bases de nervure libres (16′) sont raccordées par un jet de soudure par fusion (23) incliné par rapport à la direction d'avance du demi-tube (10) sur toute la largeur de l'autre demi-tube (10), jet de soudure par fusion amené en va-et-vient à partir du côté interne (21) de l'autre demi-tube (10),
ensuite, les éléments de liaison (37) ainsi reliés entre eux par les nervures (7′) sont raccordés avec d'autres éléments de liaison de ce type (37) par des soudures le long des bords longitudinaux (27) en des tubes d'échangeur (28) et ces derniers sont soumis à une opération de galvanisation.

3. Procédé selon la revendication 1 ou 2, caractérisé en ce qu'à partir des âmes de nervure (19, 19′) sont formées à la presse des entretoises d'espacement (29) dimensionnées avec une plus grande longueur que les bases de nervure (16, 16′) et sont pliées parallèlement aux bases de nervure (16, 16′).

4. Procédé selon l'une des revendications 1 à 3, caractérisé en ce que les nervures (7, 7′) sont fixées selon un angle s'écartant de 90° par rapport à l'extension longitudinale des tubes d'échangeur (28).

5. Dispositif pour l'exécution du procédé selon la revendication 1 ou l'une des revendications suivantes, caractérisé par une bande d'appui (3) circulant sans fin autour d'axes horizontaux (2) et raccordée avec une face de transport horizontale (4), par des bandes d'entraînement (6) circulant sans fin latéralement par rapport à la bande d'appui (3) en synchronisation avec celle-ci autour d'axes verticaux (5), par un guidage d'amenée (8) agencé sur une extrémité de la bande d'appui (3) pour les nervures (7, 7′) qui est raccordé par un couplage (32) avec au moins une bande d'entraînement (6), par une unité d'introduction (9) s'étendant dans le sens de marche (LR) de la bande d'appui (3) derrière le guidage d'amenée (8) pour les demi-tubes (10) et par un dispositif (11) situé sur l'autre extrémité de la bande d'appui (3) pour les faisceaux de soudure par fusion par exemple faisceaux laser, faisceaux d'électrons, avec un faisceau de soudure par fusion (23) guidé en va-et-vient obliquement par rapport au sens de marche (LR) de la bande d'appui (3).

6. Dispositif selon la revendication 5, caractérisé en ce que les séquences de mouvement de la bande d'appui (3), des bandes d'entraînement (6), du guidage d'amenée (8), de l'unité d'introduction (9) et du système de soudure (11) sont placées en dépendance de la vitesse d'avance des demi-tubes (10) exposés à une forte traction (ZK).

7. Dispositif selon la revendication 5 ou 6, caractérisé en ce que le dispositif d'amenée (8) comporte un puits à nervures (12) vertical, au moins un pignon de séparation (14) et un appareil de compression (15) pouvant être alimenté en air comprimé (D).

8. Dispositif selon l'une des revendications 5 à 7, caractérisé en ce que l'unité d'introduction (9) présente transversalement au sens de marche (LR) de la bande d'appui (3) des moyens de manutention efficaces (20).

9. Dispositif selon l'une des revendications 5 à 8, caractérisé en ce que des deux côtés du plan de déplacement des faisceaux de soudure par fusion (23) sont prévues des barres de compression à billes (24).

10. Dispositif selon l'une des revendications 5 à 9, caractérisé en ce que le système de soudure (11) comporte au-dessous de la bande d'appui (3) un lit de compression à cylindres (25) agencé au-dessous de la bande d'appui (3).
